# EUROPEAN PATENT SPECIFICATION

(11) **EP 1 728 985 B1**
(45) Date of publication and mention of the grant of the patent: **17.12.2008**
(21) Application number: 06011021.0
(22) Date of filing: 29.05.2006
(51) Int. Cl.: F01N 7/08, F01N 7/18, F01N 7/20, F16L 39/00, B23K 1/00, B21D 39/04

(54) **Connection structure of multi-channel tube with branching tube and connection method therefor**
Verbundstruktur zwischen Multikanalrohr und Abzweigrohren und Verbindungsmethode dafür
Structure de connection entre un tube partitionné en multiples canaux et des tubes de raccordement ainsi que la méthode de connection

(30) Priority: 30.05.2005 JP 2005158198; 30.05.2005 JP 2005158197; 30.05.2005 JP 2005158200
(43) Date of publication of application: 06.12.2006
(73) Proprietor: Calsonic Kansei Corporation, Tokyo 164-8602 (JP)
(72) Inventor: Ichimura, Nobuo, Nakano-ku Tokyo 164-8602 (JP); Takamatsu, Yoshikazu, Nakano-ku Tokyo 164-8602 (JP); Takasaki, Hiromi, Nakano-ku Tokyo 164-8602 (JP); Sato, Susumu, Ashikaga-shi Tochigi-ken (JP)
(74) Representative: Grünecker, Kinkeldey, Stockmair & Schwanhäusser Anwaltssozietät

(56) References cited:
- EP-A- 1 547 715
- EP-A- 1 657 482
- US-A- 4 796 426

## Description

### BACKGROUND OF THE INVENTION

### FIELD OF THE INVENTION

The present invention relates to a tube having a multi-channel tube and branch tubes branching therefrom, a connection structure therefor and a method for forming and connection thereof.

### DESCRIPTION OF THE RELATED ART

Many machines are equipped with tubes for supply and/or circulation of fluid and, in certain cases, the tubes are required to branch into two or more branch tubes. Such a branching tube is formed in accordance with the following procedure. First, a multi-channel tube which has a partition wall to partition the interior thereof into plural channels is provided. Second, branch tubes are respectively inserted into the channels of the multi-channel tube. Finally, brazing among the multi-channel tube and the branch tubes are carried out.

In this procedure, a gap between the branch tubes is in general too narrow to carry out brazing since the gap is regulated only by a thickness of the partition wall provided in the interior of the multi-channel tube. Therefore failure of brazing among the multi-channel tube and the branch tubes, in particular, between the partition wall and each of the branch tubes is likely to happen. Moreover, since the branch tubes having relatively narrow inner flow channels as compared with the multi-channel tube are inserted in the channels, steps are formed in the channels and cross sectional areas thereof are reduced. They may cause turbulent or not smooth flow of the fluid and increase flow resistance.

EP-A-1 547 715 a document under Article 54(3) EPC, describes a multi-channel tube having an outer tube and a partition as a unitary body wherein the partition divides an interior of the multi-channel tube into plural channels. An end of the multi-channel tube is flared to be a tapered portion, into which branching tubes are inserted. The branching tubes are brazed with a multi-channel tube along the inner surface of the tapered portion.

EP-A-1 657 482 also a document under Article 54(3) EPC, describes a multi-channel pipe having a partition wall in order to separate the pipe in two holes. One end is expanded in a conical manner. Branch pipes are inserted into the conical end of the pipe and brazed therewith.

### SUMMARY OF THE INVENTION

It is the object of the present invention to provide a tube comprising a multi-channel tube and a method for connection of a multi-channel tube with plural branched tubes securing a smooth flow of fluid flowing therethrough.

This object is solved by the features of claims 1 and 9, respectively.

Preferably, the branch tubes respectively include broadened end portions to be inserted into the expanded end portion of the multi-channel tube.

Preferably, the expanded end portion of the multi-channel tube has greater diameters in any radial directions except a direction along the partition wall than a diameter of a main portion of the multi-channel tube.

More preferably, the multi-channel tube includes a reducer portion having larger diameters at a first end linking with the expanded end portion and reducing diameters toward a second end linking with the main portion of the multi-channel tube.

Still preferably, each of end portions of the branch tubes, the end portions being inserted into the expanded end portion of the multi-channel tube, is inclined with respect to a direction in which the end portion is inserted into the expanded end portion.

Still preferably, the branch tubes are treated with presswork to have offsets with respect to the multi-channel tube.

Still preferably, cylindrical portions of the respective branch tubes, the cylindrical portions being apart from end portions of the branch tubes, are separated from each other in a state where the branch tubes are inserted into the expanded end portion.

Still preferably, the branch tubes have offsets with respect to the multi-channel tube in a state where the branch tubes are inserted into the expanded end portion, wherein first end portions of the branch tubes, the first end portions being inserted into the expanded end portion, are parallel with second end portions of the branch tubes, and wherein the branch tubes have different lengths.

Preferably, the method is further provided with steps of: broadening an end portion of each branch tube; clamping a cylindrical portion of the branch tube, the cylindrical portion being apart from the broadened end portion of the branch tube; press-working the broadened end portion of the branch tube to have an offset with respect to the cylindrical portion of the branch tube; and forming the broadened end portion of the branch tube to have a D-letter cross sectional shape.

More preferably, the step of broadening includes shaping the end portion of the branch tube to have an elliptic cross sectional shape.

More preferably, the step of clamping includes steps of inserting a mandrel into the broadened end portion of the branch tube, and bringing down an upper die to clamp the cylindrical portion of the branch tube between an upper clamp and a lower clamp and fix the branch tube by means of repulsive force of an elastic body of the upper die, and wherein the steps of press-working and forming are simultaneously carried out by forcing down the upper die to press down an upper mold onto the broadened end portion of the branch tube and press down a mandrel presser onto the mandrel so that the broadened end portion of the branch tube is formed to have the D-letter cross sectional shape and the branch tube is bent.

Still preferably, the method is further provided with steps of: clamping a cylindrical portion of each branch tube, the cylindrical portion being apart from an end portion of the branch tube; press-working the end portion of the branch tube to have an offset with respect to the cylindrical portion of the branch tube; and forming the end portion of the branch tube to have a D-letter cross sectional shape.

Further preferably, the method is further provided with a step of: broadening an end portion of each branch tube before the steps of clamping, press-working and forming.

Further preferably, the method is further provided with a step of: broadening an end portion of each branch tube to have an elliptic cross sectional shape before the steps of clamping, press-working and forming.

### BRIEF DESCRIPTION OF THE DRAWINGS

Fig. 1 shows a vertical section of a connection structure among a multi-channel tube and branch tubes in accordance with a first embodiment of the present invention;
Fig. 2 shows an enlargement taken from a circle II of Fig. 1;
Fig. 3 shows a cross section of an expanded end portion of the multi-channel tube;
Fig. 4 shows a vertical section of the expanded end portion of the multi-channel tube taken from the line IV-IV of Fig. 3;
Fig. 5 shows a vertical section of the expanded end portion of the multi-channel tube taken from the line V-V of Fig. 3;
Figs. 6A, 6B and 6C are respectively a plan view, a side view and a vertical sectional view of the branch tube, where Fig. 6C is taken from the line VIC-VIC of Fig. 6A;
Fig. 7 is a flow chart of a method for forming the branch tube in accordance with the first embodiment of the present invention;
Fig. 8 is a schematic drawing illustrating a step of setting the branch tube in a forming machine;
Fig. 9 is a schematic drawing illustrating a step of clamping the branch tube;
Fig. 10 is a schematic drawing illustrating a step of shaping an end portion of the branch tube and a step of bending;
Fig. 11 shows a cross section taken from the line XI-XI of Fig. 10;
Fig. 12 is a flow chart of a method for forming the branch tube in accordance with a second embodiment of the present invention;
Fig. 13 is a schematic drawing illustrating a step of setting the branch tube in a forming machine;
Fig. 14 is a schematic drawing illustrating a step of shaping an end portion of the branch tube;
Fig. 15 is a schematic drawing illustrating a step of bending the branch tube;
Fig. 16 shows a cross section taken from the line XVI-XVI of Fig. 15;
Fig. 17 shows a cross section of the branch tube before and after shaping; and
Fig. 18 shows a side view of an upper mold and a lower mold for shaping the end portion of the branch tube.

### DETAILED DESCRIPTION OF THE PREFERRED EMBODIMENT

Certain embodiments of the present invention will be described hereinafter with reference to the appended drawings.

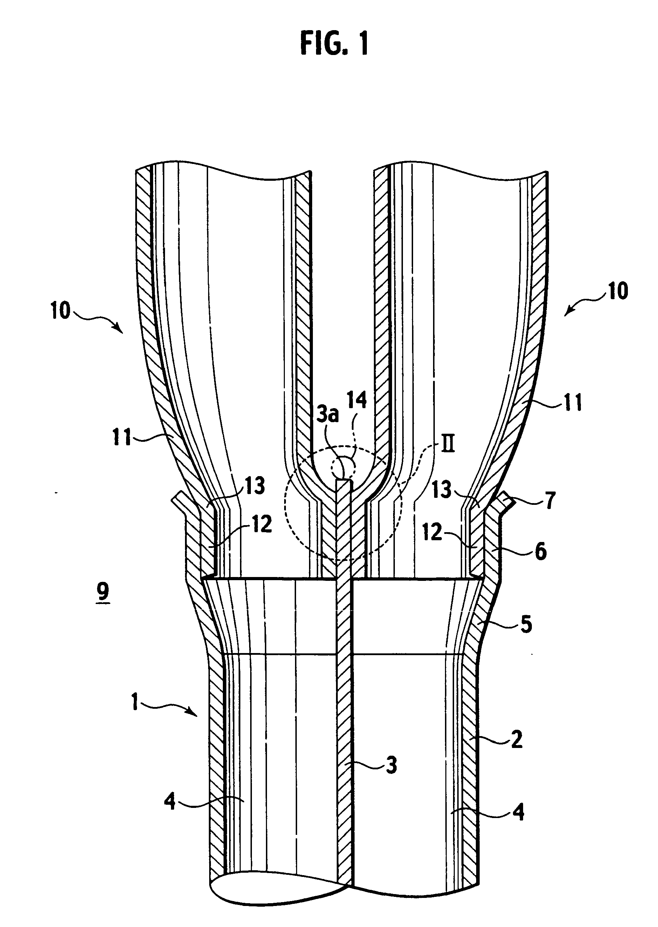

In accordance with a first embodiment of the present invention, a multi-channel tube 1 is brazed with two branch tubes 10 to form a branching tube 9 as shown in Fig. 1.

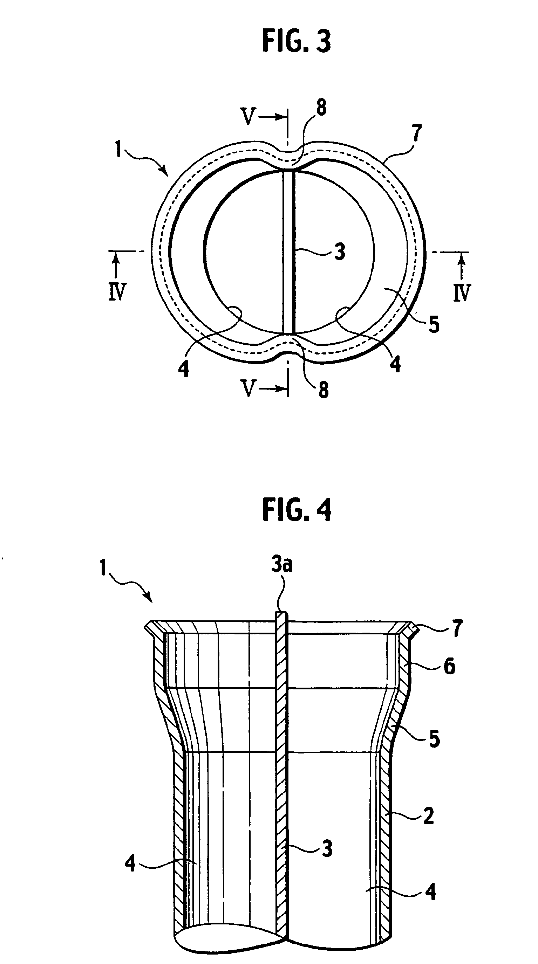

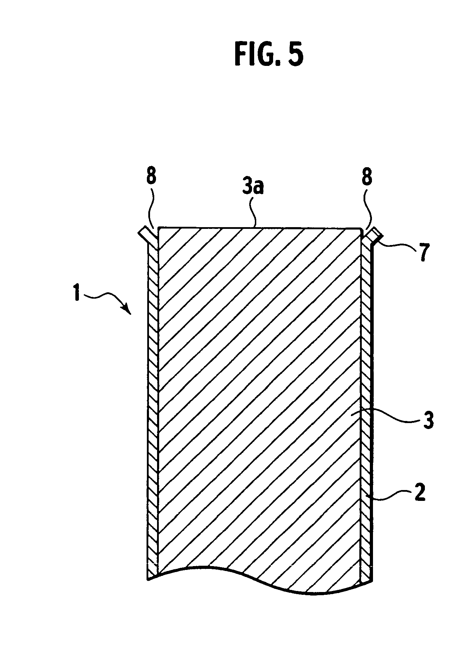

The multi-channel tube 1 is provided with an outer tubular portion 2 formed in a cylindrical shape and a partition wall 3, which partitions the interior of the multi-channel tube 1 into a pair of channels 4. The channels 4 are formed to be symmetrical and also have substantially the same cross sectional shape of a D-letter shape as shown in Figs. 3 through 5. The outer tubular portion 2 is opened at both longitudinal ends.

One end portion of the multi-channel tube 1 is expanded in radial directions to have an expanded end portion 6 and a reducer portion 5 smoothly linking the expanded portion 6 with a main portion (un-expanded proximal portion) of the multi-channel tube 1. The reducer portion 5 has a tapered shape becoming thinner from one end linking with the expanded portion 6 toward the other end linking with the main portion. More specifically, the reducer portion 5 gradually reduces diameters from a diameter of the expanded portion 6 to a diameter of the main portion so as to smoothly linking therewith. A tip end of the expanded portion 6 is further expanded to be a flaring portion 7, which is used for supporting brazing metal before and during brazing.

The partition wall 3, except for a portion around an end thereof, is tightly fixed with inner peripheries of the outer tubular portion 2 so as to keep air-tightness between both sides of the partition wall 3. The flaring portion 7 is separated from the partition wall 3 at the end thereof so as to have spaces 8 therebetween to allow fused brazing metal to pass therethrough.

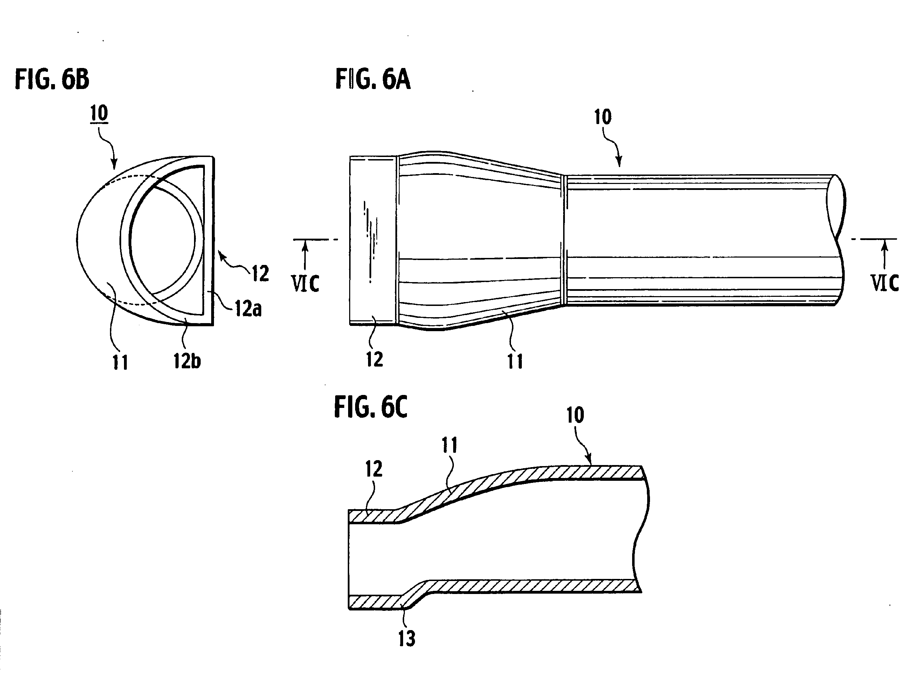

The branch tubes 10 have substantially the same shape and the same dimension except for end portions thereof as shown in Figs. 6A through 6C. The end portion of each branch tube 10 has a D-letter broadened portion 12 and a transitional portion 11. The D-letter broadened portion 12 is composed of a flat portion 12a for being contact with the partition wall 3 and an arc portion 12b for being contact with the outer tubular portion 2 and hence has a D-letter cross sectional shape. Exterior dimensions of the D-letter broadened portion 12 are greater than standard dimensions of each channel 4 and smaller than interior dimensions of the expanded portion 6. Each of the end portions of the branch tubes 10, which is inserted into the expanded end portion 6 of the multi-channel tube 1, is inclined with respect to an insertion direction in which the end portion is inserted into the expanded end portion 6.

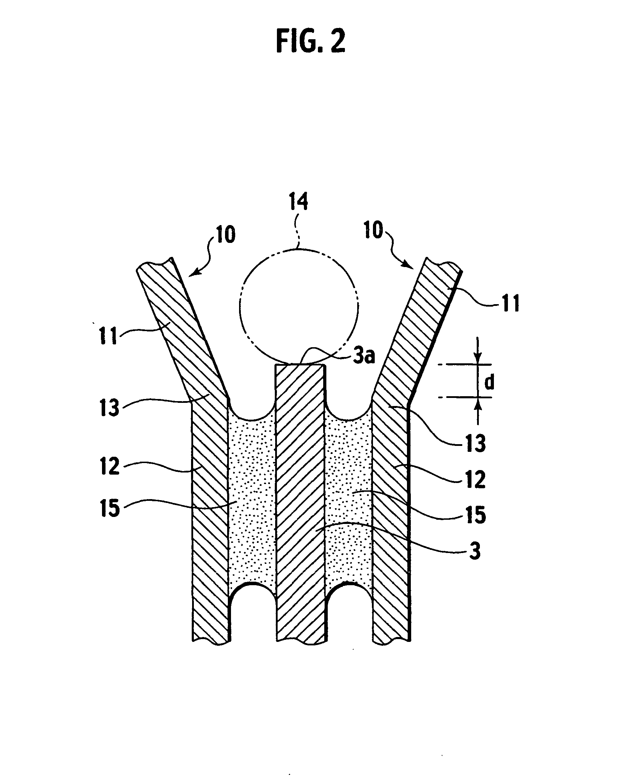

The flat portion 12a stepwise bulges outward from a straight portion of the branch tube 10 so as to form a step portion 13 where a boundary between the D-letter broadened portion 12 and the transitional portion 11 substantially exists as shown in Fig. 6C. The step portion 13 is to recede from an end surface 3a of the partition wall 3 in a length d in a state that the branch tube 10 is inserted into the multi-channel tube 1 as shown in Fig. 2.

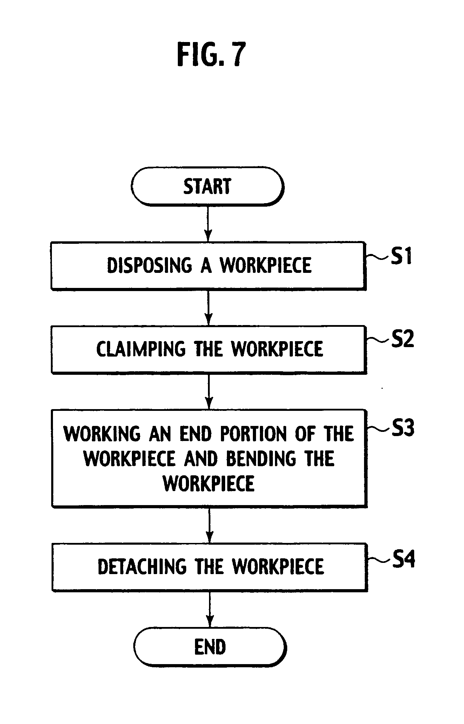

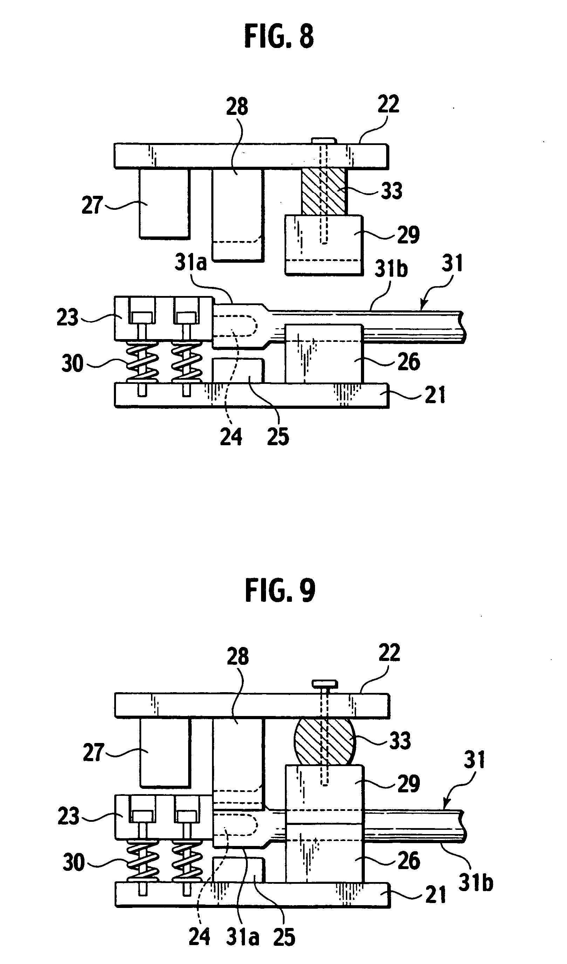

A method for forming the branch tube 10 will be described hereinafter with reference to Figs. 7 through 11. The method for forming utilizes a lower die 21 and an upper die 22 as shown in Figs. 8 through 11. On the lower die 21, a support member 23, a mandrel 24, a lower mold 25 and a lower clamp 26 are provided. Beneath the upper die 22, a mandrel presser 27, an upper mold 28 and an upper clamp 29 are provided.

The support member 23 is vertically movably attached to the lower die 21 with a spring 30 intervening therebetween. The mandrel presser 27 is so dimensioned as to press down the support member 23 when the upper die 22 goes down. The mandrel 24 has a D-letter cross section which is smaller than the cross section of the interior of the end portion of the branch tube 10 and projects sideward from the support member 23 to be inserted into an end portion 31a of a raw pipe 31. The raw pipe 31 is a raw material to form the branch tube 10. The end portion 31a of the raw pipe 31 is expanded in advance and another portion thereof, which is apart from the end portion 31a to a certain extent, is a cylindrical portion 31b left cylindrical as is produced.

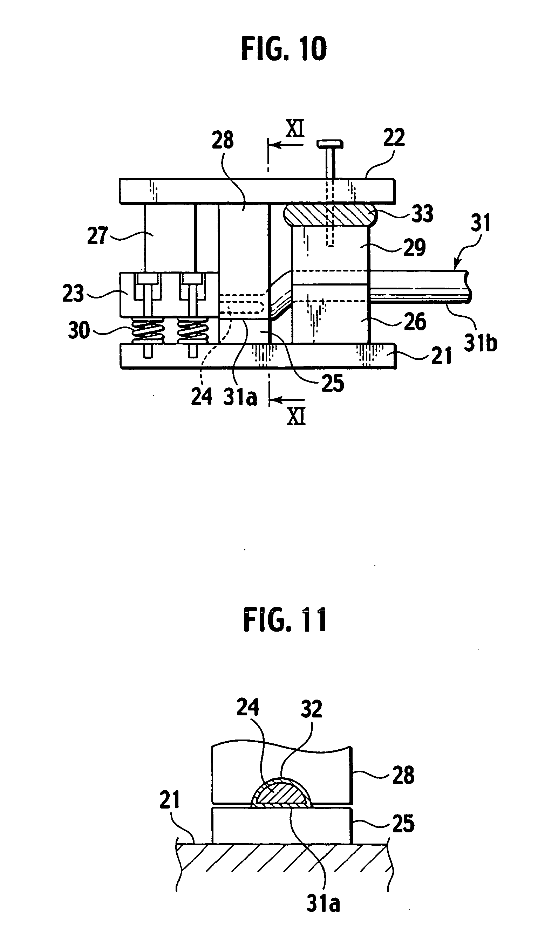

As shown in Fig. 11, the lower mold 25 has a flat upper surface to shape a lower side of the end portion 31a of the raw pipe 31 into a flat portion by presswork. A lower side of the upper mold 28 has a half cylindrical recess portion 32 to shape an upper side of the end portion 31a of the raw pipe into a complementary shape.

The upper clamp 29 is attached to the upper die 22 with an elastic body 33 of, for example, urethane rubber intervening therebetween and is vertically movable with respect to the upper die 22. The upper clamp 29 and the lower clamp 26 in combination are configured to support the cylindrical portion 31b of the raw pipe 31.

Steps of the method can be illustrated as the flowchart of Fig. 7. First, as a step S1 of Fig. 7, the raw pipe 31 for forming the branch tube 10 as a workpiece is disposed between the lower die 22 and the upper die 21 as shown in Fig. 8. Then, the cylindrical portion 31b of the raw pipe 31 is disposed on the lower clamp 26 and the mandrel 24 is inserted into the end portion 31a of the raw pipe 31. Next, as a step S2, the upper die 22 is brought down so as to clamp the cylindrical 31b of the pipe 31 between the upper clamp 29 and the lower clamp 26 and fix the raw pipe 31 by means of repulsive force of the elastic body 33 of the upper die 22 as shown in Fig. 9.

As a step S3, the upper die 22 is further brought down so as to force down the upper mold 28 onto the end portion 31a of the raw pipe 31 and press down the mandrel presser 27 onto the mandrel 24 as shown in Fig. 10. Thereby, the end portion 31a of the raw pipe 31 is formed to have a D-letter cross sectional shape and the rawpipe 31 is bent. Meanwhile, since, as is already described, the mandrel 24 has the D-letter cross section smaller than the end portion of the branch tube 10, in the course of pressing the branch tube 10 from both sides by the lower mold 25 and the upper mold 28, the mandrel 24 supports the branch tube 10 from the interior thereof so that the end portion of the branch tube 10 is formed to have the D-letter cross section.

After shaping the branch tube 10, as a step S4, the branch tube 10 as the workpiece after shaping is detached therefrom.

Next, steps of connection of the multi-channel tube 1 with the branch tubes 10 will be described hereinafter. The branch tubes 10 are respectively inserted into the channels 4 through the end portion 6 of the multi-channel tube 1 so that tip ends of the branch tubes 10 abut on and are stopped by an inner periphery of the reducer portion 5. Next, brazing metal 14 is disposed on the end surfaces of the multi-channel tube 1 and around peripheries of the branch tubes 10 as indicated by a double-dotted line in Fig. 2. The brazing metal 14 is also disposed on the end surface 3a of the partition wall 3 with facility since the branch tubes 2 are separated from each other. The branch tubes 10 may not necessarily abut on the inner periphery of the reducer portion 5 despite the above description.

Next, the multi-channel tube 1 in combination with the branch tubes 10 is inserted in any heating chamber in a state that the multi-channel tube 1 is oriented downward and the branch tubes 10 are oriented upward. Then they are heated. By heating, the brazing metal 14 is fused and flows downward by gravity force. The flowing brazing metal 14 flows into clearances respectively kept between the multi-channel tube 1 and each of the branch tubes 10. When they are cooled, the fused brazing metal 14 solidifies to form a fillet 15. In this occasion, string-like brazing metal 14 may be adhered to and along the outer periphery of the branch tube 10 so as to be a D-letter shape and fused by heating by means of a burner so that fused brazing metal 14 flows into where is between the inner periphery of the multi-channel tube 1 and the outer periphery of each branch tube 10. Thereby the respective branch tubes 10 are brazed with the multi-channel tube 1 with sufficient unitization ranging total circumferences thereof.

In accordance with the present first embodiment, fusion and flow of the brazing metal 14 take place constantly at positions receding from the ends of the multi-channel tube 1. Therefore the fused brazing metal 14 is promoted to flow into clearances kept between the multi-channel tube 1 and each of the branch tubes 10 and further prevented from spilling outward.

Since the end portions of the branch tubes 10 are inclined with respect to the insertion directions thereof, the end portions generate smaller resistance to the flow of the fluid therein as compared with a case where the end portions are perpendicular to the insertion directions.

The branch tubes 10 have offsets with respect to the multi-channel tube 1 and the cylindrical portions of the branch tubes 10 are separated from each other in a state where the branch tubes are inserted into the expanded end portion. Such a structure provides easiness and therefore reliability in placing the brazing metal 14 around the total circumferences of the branch tubes 10 and connection of the multi-channel tube 1 with the branch tubes 10.

Since the outer periphery of the end portion of the outer tubular portion 2 is provided with the flaring portion 7 for supporting the brazing metal 14, relatively large clearances between the inner periphery of the outer tubular portion 2 and the outer peripheries of the branch tubes 10 are kept. The relatively large clearances promote the fused brazing metal 14 to flow therein and keep the brazing metal 14 therein, thereby the fillet 15 is uniformly formed to range the total circumferences of the branch tubes 10.

Since the reducer portion 5 receives the inserted branch tubes 10, nothing but pushing the branch tubes 10 to abut on the reducer portion 5 is required to position the branch tubes 10 to predetermined positions. It leads to easiness and reliability in working of production of the branching tube 9.

The reducer portion 5 and the expanded end portion 6 having the same diameter as the reducer portion 5 in combination hold the branch tubes 10 in the regular positions and hence provide stability in positioning the branch tubes 10. It leads to further easiness and reliability in working of production of the branching tube 9.

Since the spaces 8 held between the flaring portion 7 and the partition wall 3 at the end thereof allow the fused brazing metal 14 to pass therethrough, the fused brazing metal 14 around one of the branch tubes 10 may easily flow toward another of the branch tubes 10 via the spaces 8. Therefore the unitization ranging total circumferences of the branch tubes 10 is further assured and hence reliability of the connection is further assured.

Forming the broadened end portions of the branch tubes 10 and bending the branch tubes 10 are simultaneously carried out by the step S3 of Fig. 7, namely forcing down the upper die 22 to press down an upper mold 28 onto the broadened end portions of the branch tubes 10 and press down a mandrel presser 27 onto the mandrel 24. Therefore reduced number of steps for production of the branching tube 9 is realized.

Formation of the D-letter cross section of the broadened end portion of the branch tube 10 is carried out in a state that the mandrel 24 having the D-letter cross section is inserted in the end portion 31a of the raw pipe 31, any irregular and localized deformation can be prevented. It leads to precise production.

Since the branch tubes 10 are inserted in the broadened end portion of the multi-channel tube 1, thicknesses of the outer walls of the branch tubes 10 do not severely reduce the cross sectional area of the flow paths in the branching tube 9. Therefore smooth flow of the fluid therein can be assured. It also leads to a smaller resistance to the flow of the fluid therein. Smooth flow of the fluid can be realized.

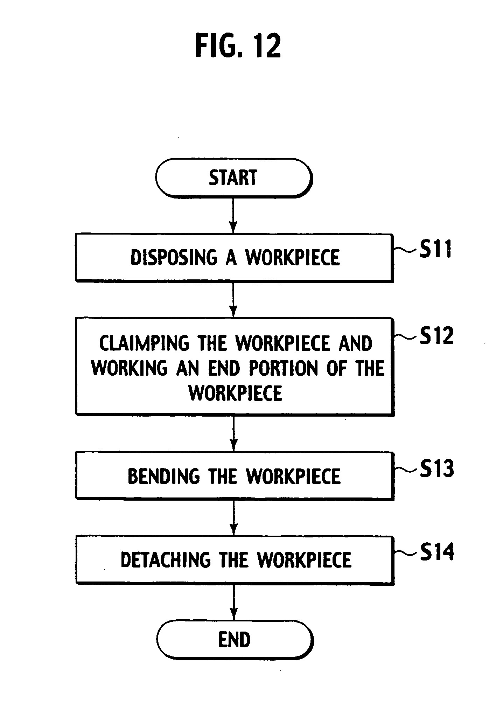

A second embodiment of the present invention will be described hereinafter with reference to Figs. 12 through 18.

As compared with the above first embodiment, the second embodiment differs only in a method of shaping the branch tubes 10 and is substantially the same as the first embodiment in the other respects.

In accordance with the present second embodiment, on the lower die 21, a support member 41, a mandrel 42, a lower mold 43 and a lower clamp 44 are provided, and, on the upper die 22, an upper mold 45 and an upper clamp 46 are provided.

The support member 41 is fixed on the lower die 21. The mandrel 42 has a D-letter cross section which is smaller than the cross section of the interior of the end portion of the branch tube 10. A pivot 47 of the support member 41 swingably supports the mandrel 42.

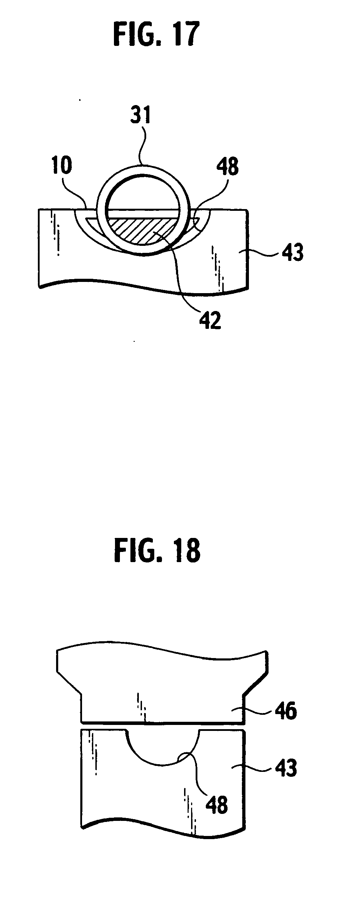

As shown in Fig. 18, the lower mold 43 has a half cylindrical recess portion 48 to shape a lower side of the end portion 31a of the raw pipe into a complementary shape. The upper mold 45 has a flat lower surface to shape a lower side of the end portion 31a of the raw pipe 31 into a flat portion by presswork.

The upper clamp 46 is attached to the upper die 22 with an elastic body 49 of, for example, urethane rubber interveneing therebetween and is vertically movable with respect to the upper die 22. The upper clamp46 and the lower clamp 44 in combination are configured to support the cylindrical portion 31b of the raw pipe 31.

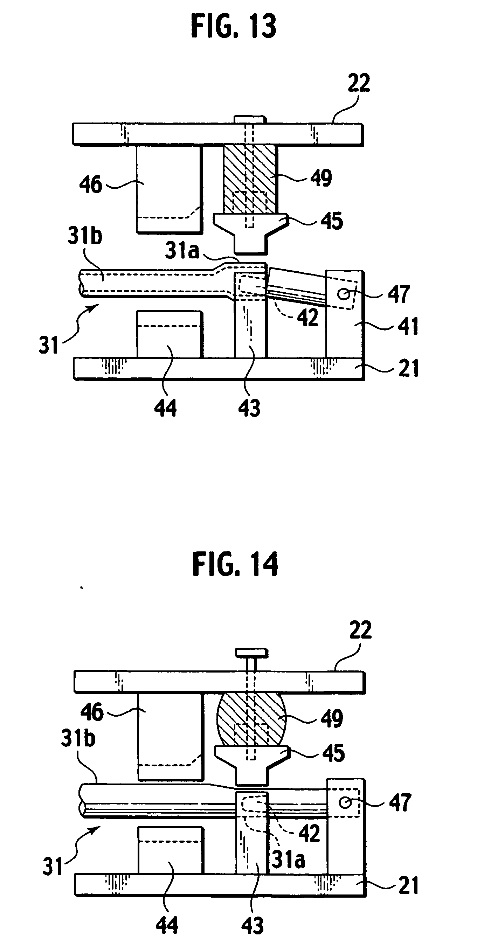

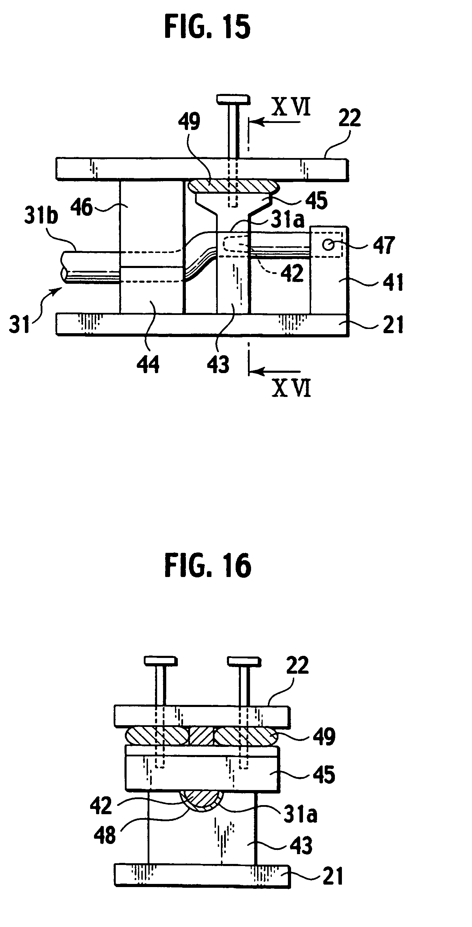

In accordance with the present second embodiment, as a step S11 of Fig. 12, the raw pipe 31 as a workpiece is disposed between the lower die 22 and the upper die 21 as shown in Fig. 13. Then, the end portion 31a of the raw pipe 31 is disposed over the lower mold 43 and the mandrel 42 is inserted into the end portion 31a of the raw pipe 31. Next, as a step S12, the upper die 22 is brought down so as to clamp the end portion 31a of the raw pipe 31 between the upper mold 45 and the lower mold 43 as shown in Fig. 14. Simultaneously, the upper mold 45 and the lower mold 43 squeeze the end portion 31a to have a D-letter cross sectional shape. Then, the mandrel 42 swings around the pivot 47 and presses the inner periphery of the end portion 31a of the raw pipe 31. Next, as a step S13, the upper die 22 is further brought down with clamping the end portion 31a of the raw pipe 31 by means of repulsive force of the elastic body 49 so as to force down the upper clamp 46 onto the cylindrical portion 31b of the raw pipe 31 as shown in Fig. 15. Thereby the raw pipe 31 is bent and shaping of the branch tube 10 is completed. After shaping the branch tube 10, as a step S14, the branch tube 10 as the workpiece after shaping is detached therefrom.

In accordance with the present second embodiment, forming the broadened end portions of the branch tubes 10 and bending the branch tubes 10 are simultaneously carried out by the step S12 of Fig. 12. Therefore reduced number of steps for production of the branching tube 9 is realized.

The above embodiments may be modified. For example, though broadening and shaping of the end portion 31a into the D-letter cross sectional shape are simultaneously carried out in the above description, shaping the end portion 31a to have an elliptic cross sectional shape may be carried out before the steps of clamping, press-working and forming. It may leads to better shaping of the end portion 31a into the D-letter cross sectional shape.

Moreover, the flaring portion 7 may not be required to support the brazing metal. A minimum requirement is to keep certain clearances respectively between the multi-channel tube 1 and each of the branch tubes 10. Further, though the end portion 6 of the multi-channel tube 1 is expanded to have greater diameters in any radial directions except a direction along the partition wall 3 than a diameter of a main portion of the multi-channel tube 1 in accordance with the above description, the expanded end portion 6 of the multi-channel tube 1 may be expanded only in a direction perpendicular to the direction along the partition wall 3.

Although the invention has been described above by reference to certain embodiments of the invention, the invention is not limited to the embodiments described above. Modifications and variations of the embodiments described above will occur to those skilled in the art, in light of the above teachings.

## Claims

1. A tube (9) comprising:
a multi-channel tube (1) including a partition wall (3) to partition an interior of the multi-channel tube (1) into plural channels (4) and an expanded end portion (6) being expanded only in a direction perpendicular to the direction along the partition wall (3) so that the expanded end portion (6) extends parallel to a center-line of the multi-channel tube (1);
branch tubes (10) inserted into the expanded end portion (6) and respectively communicating with the channels (4); and
clearances for being filled with brazing metal (14), the clearances being respectively kept between the inner periphery of the respective channel (4) of the multi-channel tube (1) and each of the outer periphery of the branch tubes (10) .

2. The tube (9) of claim 1, **characterized in that** the branch tubes (10) respectively include broadened end portions to be inserted into the expanded end portion (6) of the multi-channel tube (1).

3. The tube (9) of claim 1 or 2, **characterized in that** the expanded end portion (6) of the multi-channel tube (1) has greater diameters in any radial directions except a direction along the partition wall (3) than a diameter of a main portion of the multi-channel tube (1).

4. The tube (9) of one of claims 1 to 3, **characterized in that** the multi-channel tube (1) includes a reducer portion (5) having larger diameters at a first end linking with the expanded end portion (6) and reducing diameters toward a second end linking with the main portion of the multi-channel tube (1).

5. The tube (9) of one of claims 1 to 4, **characterized in that** each of end portions of the branch tubes (10), being inserted into the expanded end portion (6) of the multi-channel tube (1), is inclined with respect to a direction in which the end portion is inserted into the expanded end portion (6) in such a manner that the end portions generate smaller resistance to the flow of the fluid therein as compared with a case where each end portion is perpendicular to the insertion direction.

6. The tube (9) of one of claims 1 to 5, **characterized in that** the branch tubes (10) are treated with presswork to have offsets with respect to the multi-channel tube (1).

7. The tube (9) of one of claims 1 to 6, **characterized in that** cylindrical portions of the respective branch tubes (10), the cylindrical portions being apart from end portions of the branch tubes (10), are separated from each other in a state where the branch tubes (10) are inserted into the expanded end portion (6).

8. The tube (9) of one of claims 1 to 7, **characterized in that** the branch tubes (10) have offsets with respect to the multi-channel tube (1) in a state where the branch tubes (10) are inserted into the expanded end portion (6), wherein first end portions of the branch tubes (10), the first end portions being inserted into the expanded end portion (6), are parallel with second end portions of the branch tubes (10), and wherein the branch tubes (10) have different lengths.

9. The tube (9) of one of claims 1 to 8, **characterized in that** the clearances are formed between inner peripheries of the channels (4) of the expanded end portion (6) of the multi-channel tube (1) and an outer periphery of the branch tube (10).

10. The tube (9) of one of claims 1 to 9, **characterized in that** the end portion of the multi-channel tube (1) is continuously formed in an order a flare portion (7), the expanded end portion (6), a reducer portion (5) and an outer tubular portion (2).

11. A method for connection of a multi-channel tube (1) with plural branch tubes (10), the method comprising steps of:
expanding an end portion (6) of the multi-channel tube (1) in a direction perpendicular to the direction along a partition wall (3) of the multi-channel tube (1) so that the expanded end portion (6) extends parallel to a center-line of the multi-channel tube;
inserting the branch tubes (10) into the expanded end portion (6), respectively; and
brazing each of the branch tubes (10) with the expanded end portion (6).

12. The method of claim 11, **characterized by** the steps of:
broadening an end portion of each branch tube (10);
clamping a cylindrical portion of the branch tube (10), the cylindrical portion being apart from the broadened end portion of the branch tube (10);
press-working the broadened end portion of the branch tube (10) to have an offset with respect to the cylindrical portion of the branch tube (10); and
forming the broadened end portion of the branch tube (10) to have a D-lefter cross sectional shape.

13. The method of claim 12, **characterized in that** the step of broadening includes shaping the end portion of the branch tube (10) to have an elliptic cross sectional shape.

14. The method of claim 12 or 13, **characterized in that** the step of clamping includes steps of inserting a mandrel (24) into the broadened end portion of the branch tube (10), and bringing down an upper die (22) to clamp the cylindrical portion of the branch tube (10) between an upper clamp (29) and a lower clamp (26) and fix the branch tube (10) by means of repulsive force of an elastic body (33) of the upper die (22), and wherein the steps of press-working and forming are simultaneously carried out by forcing down the upper die (22) to press down an upper mold (28) onto the broadened end portion of the branch tube (10) and press down a mandrel presser (27) onto the mandrel (24) so that the broadened end portion of the branch tube (10) is formed to have the D-letter cross sectional shape and the branch tube (10) is bent.

15. The method of claim 11, **characterized by** the steps of:
clamping a cylindrical portion of each branch tube (10), the cylindrical portion being apart from an end portion of the branch tube (10);
press-working the end portion of the branch tube (10) to have an offset with respect to the cylindrical portion of the branch tube (10); and
forming the end portion of the branch tube (10) to have a D-letter cross sectional shape.

16. The method of claim 15, **characterized by** a step of:
broadening an end portion of each branch tube (10) before the steps of clamping, press-working and forming.

17. The method of claim 15, **characterized by** a step of:
broadening an end portion of each branch tube (10) to have an elliptic cross sectional shape before the steps of clamping, press-working and forming.

## Patentansprüche

1. Rohr (9), aufweisend:
ein Mehrkanalrohr (1), das eine Trennwand (3) enthält, um ein Inneres des Mehrkanalrohrs (1) in mehrere Kanäle (4) zu unterteilen, und einen ausgedehnten Endabschnitt (6), der nur in einer Richtung, rechtwinklig zu der Richtung entlang der Trennwand (3), ausgedehnt ist, so dass der ausgedehnte Endabschnitt (6) parallel zu einer Mittellinie des Mehrkanalrohres (1) sich erstreckt; Verzweigungsrohre (10), eingesetzt in den ausgedehnten Endabschnitt (6) und die jeweils mit den Kanälen (4) in Verbindung; und
Spalten zum Füllen mit Hartlotmaterial (14), wobei die Spalte jeweils zwischen dem Innenumfang des jeweiligen Kanales (4) des Mehrkanalrohres (1) und jedem der Außenumfänge der Verzweigungsrohre (10) gehalten werden.

2. Rohr (9) nach Anspruch 1, **dadurch gekennzeichnet, dass** die Verzweigungsrohre (10) jeweils verbreiterte Endabschnitte enthalten, um in den ausgedehnten Endabschnitt (6) des Mehrkanalrohres (1) eingesetzt zu werden.

3. Rohr (9) nach Anspruch 1 oder 2, **dadurch gekennzeichnet, dass** der ausgedehnte Endabschnitt (6) des Mehrkanalrohres (1) größere Durchmesser in jeder radialen Richtung, ausgenommen eine Richtung entlang der Trennwand (3), als ein Durchmesser eines Hauptabschnittes des Mehrkanalrohres (1) hat.

4. Rohr (9) nach einem der Ansprüche 1 bis 3, **dadurch gekennzeichnet, dass** das Mehrkanalrohr (1) einen Reduzierabschnitt (5) enthält, der größere Durchmesser an einem ersten Ende hat, das mit dem ausgedehnten Endabschnitt (6) verbindet, und reduzierte Durchmesser in Richtung zu einem zweiten Ende, das mit dem Hauptabschnitt des Mehrkanalrohres (1) verbindet.

5. Rohr (9) nach einem der Ansprüche 1 bis 4, **dadurch gekennzeichnet, dass** jeder der Endabschnitte der Verzweigungsrohre (10), der in den ausgedehnten Endabschnitt (6) des Mehrkanalrohres (1) eingesetzt ist, in Bezug auf eine Richtung geneigt ist, in der der Endabschnitt in den ausgedehnten Endabschnitt (6) eingesetzt ist derart, dass die Endabschnitte einen kleineren Widerstand gegenüber der Strömung des Fluids darin erzeugen, wenn verglichen mit einem Fall, wo jeder Endabschnitt zu der Einsetzrichtung rechtwinklig ist.

6. Rohr (9) nach einem der Ansprüche 1 bis 5, **dadurch gekennzeichnet, dass** die Verzweigungsrohre (10) mit einer Pressbearbeitung behandelt werden, um Versetzungen in Bezug auf das Mehrkanalrohr (1) zu haben.

7. Rohr (9) nach einem der Ansprüche 1 bis 6, **dadurch gekennzeichnet, dass** zylindrische Abschnitte der jeweiligen Verzweigungsrohre (10), wobei die zylindrischen Abschnitte von den Endabschnitten der Verzweigungsrohre (10) entfernt sind, voneinander in einem Zustand getrennt sind, wo die Verzweigungsrohre (10) in den ausgedehnten Endabschnitt (6) eingesetzt sind.

8. Rohr (9) nach einem der Ansprüche 1 bis 7, **dadurch gekennzeichnet, dass** die Verzweigungsrohre (10) in Bezug auf das Mehrkanalrohr (1) Versetzungen in einem Zustand haben, wo die Verzweigungsrohre (10) in den ausgedehnten Endabschnitt (6) eingesetzt sind, wobei erste Endabschnitte der Verzweigungsrohre (10), wobei diese ersten Endabschnitte in den ausgedehnten Endabschnitt (6) eingesetzt sind, mit den zweiten Endabschnitten der Verzweigungsrohre (10) parallel sind und wobei die Verzweigungsrohre (10) unterschiedliche Längen haben.

9. Rohr (9) nach einem der Ansprüche 1 bis 8, **dadurch gekennzeichnet, dass** die Spalten zwischen den Innenumfängen der Kanäle (4) des ausgedehnten Endabschnittes (6) des Mehrkanalrohres (1) und einem Außenumfang des Verzweigungsrohres (10) gebildet sind.

10. Rohr (9) nach einem der Ansprüche 1 bis 9, **dadurch gekennzeichnet, dass** der Endabschnitt des Mehrkanalrohres (1) fortlaufend in einer Abfolge gebildet ist eines ausgestellten Abschnittes (7), des ausgedehnten Endabschnittes (6), eines Reduzierabschnittes (5) und eines äußeren Rohrabschnittes (2).

11. Verfahren zum Verbinden eines Mehrkanalrohres (1) mit mehreren Verzweigungsrohren (10), wobei das Verfahren die Schritte aufweist, von:
Ausdehnen eines Endabschnittes (6) des Mehrkanalrohres (1) in eine Richtung rechtwinklig zu der Richtung einer Trennwand (3) des Mehrkanalrohres (1), so dass sich der ausgedehnte Endabschnitt (6) parallel zu einer Mittellinie des Mehrkanalrohres erstreckt;
Jeweiliges Einsetzen der Verzweigungsrohre (10) in den ausgedehnten Endabschnitt (6); und
Hartlöten jedes der Verzweigungsrohre (10) mit dem ausgedehnten Endabschnitt (6).

12. Verfahren nach Anspruch 11, **gekennzeichnet durch** die Schritte von:
Aufweiten eines Endabschnittes jedes Verzweigungsrohres (10);
Klemmen eines zylindrischen Abschnittes des Verzweigungsrohres (10), wobei der zylindrische Abschnitt von dem ausgeweiteten Endabschnitt des Verzweigungsrohres (10) entfernt ist;
Preßbearbeiten des ausgeweiteten Endabschnittes des Verzweigungsrohres (10), um einen Versatz in Bezug auf den zylindrischen Abschnitt des Verzweigungsrohres (10) zu haben; und
Bilden des ausgeweiteten Endabschnittes des Verzweigungsrohres (10), um eine Querschnittsform entsprechend einem Buchstaben D zu haben.

13. Verfahren nach Anspruch 12, **dadurch gekennzeichnet, dass** der Schritt des Aufweitens das Formen des Endabschnittes des Verzweigungsrohres (10) enthält, um eine elliptische Querschnittsform zu haben.

14. Verfahren nach Anspruch 12 oder 13, **dadurch gekennzeichnet, dass** der Schritt des Klemmens die Schritte des Einsetzens eines Dornes (24) in den aufgeweiteten Endabschnitt des Verzweigungsrohres (10) und das Niederbringen eines oberen Werkzeuges (22) enthält, um den zylindrischen Abschnitt des Verzweigungsrohres (10) zwischen einer oberen Spannvorrichtung (29) und einer unterer Spannvorrichtung (26) zu spannen und um das Verzweigungsrohr (10) mittels der Rückstoßkraft des elastischen Körpers (33) des oberen Werkzeuges (22) zu befestigen, und wobei die Schritte der Pressbearbeitung und des Bildens gleichzeitig durch das zwangsweise Herabdrücken des oberen Werkzeuges (22) zum Herunterpressen einer oberen Form (28) auf den ausgeweiteten Endabschnitt des Verzweigungsrohres (10) ausgeführt werden und um einen Dompresser (27) auf den Dom (24) zu pressen derart, dass der ausgeweitete Endabschnitt des Verzweigungsrohres (10) gebildet wird, um eine Querschnittsform nach dem Buchstaben D zu haben und das Verzweigungsrohr wird gebogen.

15. Verfahren nach Anspruch 11, **gekennzeichnet durch** die Schritte von:
Spannen des zylindrischen Abschnittes jedes Verzweigungsrohres (10), wobei der zylindrische Abschnitt von einem Endabschnitt des Verzweigungsrohres (10) entfernt ist;
Pressbearbeitung des Endabschnittes des Verzweigungsrohres (10), um einen Versatz in Bezug auf den zylindrischen Abschnitt des Verzweigungsrohres (10) zu haben; und
Bilden des Endabschnittes des Verzweigungsrohres (10), um eine Querschnittsform entsprechend einem Buchstaben D zu haben.

16. Verfahren nach Anspruch 11, **gekennzeichnet durch** die Schritte von:
Aufweiten eines Endabschnittes jedes Verzweigungsrohres (10) vor den Schritten des Spannens, der Pressbearbeitung und des Formgebens.

17. Verfahren nach Anspruch 5, **gekennzeichnet durch** die Schritte von:
Aufweiten eines Endabschnittes des Verzweigungsrohres (10), um eine elliptische Querschnittsform zu erhalten vor den Schritten des Spannens, der Pressbearbeitung und des Formgebens.

## Revendications

1. Tube (9) comportant :
un tube multicanal (1) comprenant une paroi de séparation (3) destinée à diviser un intérieur du tube multicanal (1) en plusieurs canaux (4) et une partie d'extrémité agrandie (6) qui est agrandie seulement dans une direction perpendiculaire à la direction le long de la paroi de séparation (3) de telle sorte que la partie d'extrémité agrandie (6) s'étend parallèlement à un axe du tube multicanal (1) ;
des tubes d'embranchement (10) insérés dans la partie d'extrémité agrandie (6) et communiquant de manière respective avec les canaux (4) ; et
des jeux destinés à être remplis de métal de brasage (14), les jeux étant maintenus de manière respective entre la périphérie interne du canal respectif (4) du tube multicanal (1) et chaque périphérie externe des tubes d'embranchement (10).

2. Tube (9) selon la revendication 1, **caractérisé en ce que** les tubes d'embranchement (10) comprennent de manière respective des parties d'extrémité élargies devant être insérées dans la partie d'extrémité agrandie (6) du tube multicanal (1).

3. Tube (9) selon la revendication 1 ou 2, **caractérisé en ce que** la partie d'extrémité agrandie (6) du tube multicanal (1) a de plus grands diamètres dans toutes les directions radiales excepté une direction le long de la paroi de séparation (3) qu'un diamètre d'une partie principale du tube multicanal (1).

4. Tube (9) selon l'une des revendications 1 à 3, **caractérisé en ce que** le tube multicanal (1) comprend une partie de réduction (5) ayant de plus grands diamètres au niveau d'une première extrémité se raccordant à la partie d'extrémité agrandie (6) et des diamètres diminuant vers une deuxième extrémité se raccordant à la partie principale du tube multicanal (1).

5. Tube (9) selon l'une des revendications 1 à 4, **caractérisé en ce que** chacune des parties d'extrémité des tubes d'embranchement (10), qui sont insérées dans la partie d'extrémité agrandie (6) du tube multicanal (1), est inclinée par rapport à une direction dans laquelle la partie d'extrémité est insérée dans la partie d'extrémité agrandie (6) d'une manière telle que les parties d'extrémité génèrent une résistance plus faible à l'écoulement du fluide à l'intérieur par rapport à un cas où chaque partie d'extrémité est perpendiculaire à la direction d'insertion.

6. Tube (9) selon l'une des revendications 1 à 5, **caractérisé en ce que** les tubes d'embranchement (10) sont traités par travail à la presse afin d'avoir des décalages par rapport au tube multicanal (1).

7. Tube (9) selon l'une des revendications 1 à 6, **caractérisé en ce que** des parties cylindriques des tubes d'embranchement respectifs (10), les parties cylindriques étant à l'écart des parties d'extrémité des tubes d'embranchement (10), sont séparées l'une de l'autre dans un état où les tubes d'embranchement (10) sont insérés dans la partie d'extrémité agrandie (6).

8. Tube (9) selon l'une des revendications 1 à 7, **caractérisé en ce que** les tubes d'embranchement (10) ont des décalages par rapport au tube multicanal (1) dans un état où les tubes d'embranchement (10) sont insérés dans la partie d'extrémité agrandie (6), des premières parties d'extrémité des tubes d'embranchement (10), les premières parties d'extrémité étant insérées dans la partie d'extrémité agrandie (6), étant parallèles à des deuxièmes parties d'extrémité des tubes d'embranchement (10), et les tubes d'embranchement (10) ayant des longueurs différentes.

9. Tube (9) selon l'une des revendications 1 à 8, **caractérisé en ce que** les jeux sont formés entre des périphéries internes des canaux (4) de la partie d'extrémité agrandie (6) du tube multicanal (1) et une périphérie externe du tube d'embranchement (10).

10. Tube (9) selon l'une des revendications 1 à 9, **caractérisé en ce que** la partie d'extrémité du tube multicanal (1) est formé de manière continue dans l'ordre d'une partie évasée (7), de la partie d'extrémité agrandie (6), d'une partie de réduction (5) et d'une partie tubulaire externe (2).

11. Procédé pour le raccordement d'un tube multicanal (1) à plusieurs tubes d'embranchement (10), le procédé comportant les étapes consistant à :
agrandir une partie d'extrémité (6) du tube multicanal (1) dans une direction perpendiculaire à la direction le long d'une paroi de séparation (3) du tube multicanal (1) de telle sorte que la partie d'extrémité agrandie (6) s'étend parallèlement à un axe du tube multicanal ;
insérer les tubes d'embranchement (10) dans la partie d'extrémité agrandie (6), respectivement ; et
braser chacun des tubes d'embranchement (10) avec la partie d'extrémité agrandie (6).

12. Procédé selon la revendication 11, **caractérisé par** les étapes consistant à :
élargir une partie d'extrémité de chaque tube d'embranchement (10) ;
serrer une partie cylindrique du tube d'embranchement (10), la partie cylindrique étant à l'écart de la partie d'extrémité élargie du tube d'embranchement (10) ;
travailler à la presse la partie d'extrémité élargie du tube d'embranchement (10) afin d'avoir un décalage par rapport à la partie cylindrique du tube d'embranchement (10) ; et
former la partie d'extrémité élargie du tube d'embranchement (10) afin d'avoir une forme en coupe de lettre D.

13. Procédé selon la revendication 12, **caractérisé en ce que** l'étape de l'élargissement comprend le fait de mettre en forme la partie d'extrémité du tube d'embranchement (10) de façon à avoir une forme en coupe elliptique.

14. Procédé selon la revendication 12 ou 13, **caractérisé en ce que** l'étape de serrage comprend des étapes d'insertion d'un mandrin (24) dans la partie d'extrémité élargie du tube d'embranchement (10), et de descente d'une matrice supérieure (22) afin de serrer la partie cylindrique du tube d'embranchement (10) entre une bride supérieure (29) et une bride inférieure (26) et de fixer le tube d'embranchement (10) au moyen d'une force de répulsion d'un corps élastique (33) de la matrice supérieure (22), et les étapes de travail à la presse et de formage sont réalisées simultanément en forçant vers le bas la matrice supérieure (22) de façon à pousser vers le bas un moule supérieur (28) sur la partie d'extrémité élargie du tube d'embranchement (10) et pousser vers le bas un poussoir de mandrin (27) sur le mandrin (24) de telle sorte que la partie d'extrémité élargie du tube d'embranchement (10) est formée de façon à avoir la forme en coupe d'une lettre D et le tube d'embranchement (10) est cintré.

15. Procédé selon la revendication 11, **caractérisé par** les étapes consistant à :
serrer une partie cylindrique de chaque tube d'embranchement (10), la partie cylindrique étant à l'écart d'une partie d'extrémité du tube d'embranchement (10) ;
travailler à la presse la partie d'extrémité du tube d'embranchement (10) afin d'avoir un décalage par rapport à la partie cylindrique du tube d'embranchement (10) ; et
former la partie d'extrémité du tube d'embranchement (10) de façon à avoir la forme en coupe d'une lettre D.

16. Procédé selon la revendication 15, **caractérisé par** une étape consistant à :
élargir une partie d'extrémité de chaque tube d'embranchement (10) avant les étapes de serrage, de travail à la presse et de formage.

17. Procédé selon la revendication 15, **caractérisé par** une étape consistant à :
élargir une partie d'extrémité de chaque tube d'embranchement (10) afin d'avoir une forme en coupe elliptique avant les étapes de serrage, de travail à la presse et de formage.
